# EUROPÄISCHE PATENTSCHRIFT

(11) **EP 1 922 904 B1**
(45) Veröffentlichungstag und Bekanntmachung des Hinweises auf die Patenterteilung: **12.03.2014**
(21) Anmeldenummer: 06793068.5
(22) Anmeldetag: 29.08.2006
(51) Int. Cl.: H05B 33/14, C09K 11/79, C04B 35/584, C04B 35/597

(54) **CARBIDONITRIDOSILIKAT-LEUCHTSTOFFE**
CARBIDONITRIDOSILICATE LUMINESCENT SUBSTANCE
SUBSTANCES LUMINESCENTES A BASE DE CARBIDONITRIDOSILICATE

(30) Priorität: 30.08.2005 DE 102005041153
(43) Veröffentlichungstag der Anmeldung: 21.05.2008
(73) Patentinhaber: Leuchtstoffwerk Breitungen GmbH, 98597 Breitungen (DE); Tridonic Jennersdorf GmbH, 8380 Jennersdorf (AT)
(72) Erfinder: STARICK, Detlef, 17489 Greifswald (DE); RÖSLER, Sven, 99817 Eisenach (DE); RÖSLER, Sylke, 99817 Eisenach (DE); HINTZEN, Hubertus Theresia, NL-5646 Je Eindhoven (NL); LI, Yuan Qiang, Nanjing, Jiangsu 210037 (CN)
(74) Vertreter: Engel, Christoph Klaus
(86) Internationale Anmeldenummer: PCT/EP2006/065788
(87) Internationale Veröffentlichungsnummer: WO 2007/025973

(56) Entgegenhaltungen:
- EP-A- 1 413 619
- EP-A- 1 560 274
- WO-A-2004/055910
- WO-A2-2004/047138
- HÖPPE A. H, KOTZYBA G, PÖTTGEN R,SCHNICK W: "High-temperature synthesis, crystal structure, optical properties, and magnetism of the carbidonitridosilicates Ho2[Si4N6C] and Tb2[Si4N6C]" JOURNAL OF MATERIALS CHEMISTRY, Bd. 11, 2001, Seiten 3300-3306, XP002407606 in der Anmeldung erwähnt
- LIDDELL K, THOMPSON D.P, BRÄUNIGER T, HARRIS R.K: "M2(Si,Al)4(N,C)7 (M=La, Y, Ca) carbonitrides I. Synthesis and structural characterisation by XRD and NMR" JOURNAL OF THE EUROPEAN CERAMIC SOCIETY, Bd. 25, 15. Mai 2004 (2004-05-15), Seiten 37-47, XP002407607 in der Anmeldung erwähnt
- LIDDELL K, THOMPSON D.P, TEAT S.J: "M2(Si,Al)4(N,C)7 (M=La, Y, Ca) carbonitrides II. The crystal structure of Ca0.8Y1.2Si4N6.8C0.2" JOURNAL OF THE EUROPEAN CERAMIC SOCIETY, Bd. 25, 18. Mai 2004 (2004-05-18), Seiten 49-54, XP002407608

## Beschreibung

Die vorliegende Erfindung betrifft anorganische lumineszierende Materialien, die in der Lage sind, eine energiereiche Anregungsstrahlung wirkungsvoll zu absorbieren und sie mit hoher Effizienz in eine energieärmere Emissionsstrahlung umzuwandeln. Dabei sind als Anregungsstrahlung insbesondere UV-Strahlung oder aber blaues Licht geeignet, woraus im Zuge der Strahlungsumwandlung Emissionen im grünen, gelben, orangen und/oder im roten Bereich des sichtbaren Spektrums resultieren.

Es ist seit langem bekannt, dass anorganische Leuchtstoffe in vorteilhafter Weise sowohl zur Visualislerung unsichtbarer Strahlungsbilder (z.B. in der Röntgendiagnostik oder Displaytechnik) als auch zum Zwecke der Allgemeinbeleuchtung (z.B. bei Fluoreszenzlampen oder zur Herstellung weißer LED) eingesetzt werden können. Solche Leuchtstoffe besitzen üblicherweise ein Wirtsgitter, welches mit speziellen Elementen dotiert wird. Dabei wurden in technischen Anwendungen als Wirtsgitter für derartige Luminophore bisher zumeist Sulfide, Halogenide und Oxide oder aber, in besonders starkem Maße, komplexe Salze sauerstoffhaltiger Säuren (Borate, Aluminate, Silikate, Phosphate, Molybdate, Wolframate usw.) genutzt.

Die EP 1 560 274 A1 betrifft die Verbesserung von nitridisehen und oxynitridischen Konversionsleuchtstoffen durch eine Oberflächenbeschichtung. Als Leuchtstoffe der Nitridgruppe werden in einer allgemeinen Form Verbindungen der Zusammensetzung L-M-N:R bzw. L-M-O-N:R mit L = Be, Mg, Ca, Sr, Ba, Zn sowie M = C, Si, Ge, Sn, Ti, Zr, Hf und R als Seltenerdmetall angesehen. Bei der L-Komponente handelt es sich ausschließlich um zweiwertige Elemente, die mit Ausnahme von Zn der Elementfämilie der Erdalkalimetalle (EA) angehören. Dies führt dann auch zu den in dieser Druckschrift angegebenen Beispielen, die allesamt Abkömmlinge der Verbindungsklassen EA₂Si₅N₈: R bzw. EASi₂O₂N₂: R sind.

Erst in den letzten Jahren gelang es, auch nitridische (wie beilspielsweise die von Hintzen et al. in der EP 1 104 799 A1 und EP 1 238 041 B1 beschriebenen rot emittierenden Verbindungen des Typs M₂Si₅N₈:Eu²⁺, mit M= Ca, Sr, Ba) und oxynitridische Materialien (als ein Beispiel seien die blau, grün und gelb emittierenden europium- oder ceriümdotierten MSi₂O₂N₂Verbindungen gemäß Delsing et al. in der WO 2004/030109 A1 genannt; M = Ca, Sr, Ba) als Wirtsgitter für die Synthese leistungsfähiger Leuchtstoffe zu erschließen. Das Interesse an derartigen Luminophoren ist vor allem im Zusammenhang mit ihrer vorteilhaften Anwendung als Konversionsleuchtstoffe für die Herstellung weißer LED seitdem weiter stark gewachsen. Dies ist vor allem darauf zurückzuführen, dass von Materialien dieser Art wegen der hohen Kovalenz der chemischen Bindungen und der erwiesenermaßen ausgeprägten Starrheit des Grundgitters eine besonders hohe chemische und thermische Stabilität erwartet wird. Die Nachteile der meisten sulfidischen und sauerstoffdominierten Konversionsleuchtstoffe bestehen vor allem darin, dass ihre Lumineszenzeffizienzen bei Temperaturen oberhalb von 100 °C zumeist sehr schnell abnehmen. Für die Herstellung weiterentwickelter weißer LED mit höherer Leistungsaufnahme werden aber Konversionsleuchtstoffe mit deutlich verbesserter Temperaturbelastbarkeit benötigt.

Andererseits ist in diesem Zusammenhang anzumerken, dass es sich bei allen derzeit technisch eingesetzten anorganischen Konversionsleuchtstoffen (Yttriumaluminate, Thiogallate, Erdalkalisulfide, Erdalkalisilikate, Nitride, Oxynitride), die zur Erzeugung von weißem Licht in Kombination mit blau emittierenden LED dienen, ausnahmslos um Eu²⁺ bzw. Ce³⁺ aktivierte Systeme mit äußerst breitbandiger Emission handelt. Charakteristisch für derartige Leuchtstoffe sind elektronische 5d-4f-Übergänge, die leicht vom äußeren Kristallfeld und damit natürlich auch von ggf. anwesenden Löschzentren beeinflusst werden können. Damit ist die Situation grundsätzlich anders als bei der Anwendung von Luminophoren in Fluoreszenzlampen. In diesem Fall werden als Grün- und Rotkomponenten hauptsächlich linienhaft emittierende Leuchtstoffe eingesetzt, bei denen die zu beobachtenden Lumineszenzerscheinungen auf Übergängen zwischen den gegenüber der Wirkung äußerer Kristallfelder gut abgeschirmten 4f-Elektronen (4f-4f-Übergänge) beruhen.

Hohe kovalente Bindungsanteile sind auch für eine andere, erst in jüngster Zeit entdeckte Verbindungsklasse charakteristisch. Es handelt sich dabei um die seltenerd- und/oder erdalkalimetallhaltigen Carbidonitridosilikate. Erste Vertreter dieser Materialklasse (beispielsweise die Verbindungen Ho₂Si₄N₆C, Tb₂Si₄N₆C (vergleiche Höppe et al., J. Mater. Chem 11 (2001) 3300) und (La,Y,Ca)₂(Si,Al)₄(N,C)₇ (vergleiche Lindel et al. J. Eur. Ceram Soc. 25 (2005) 37) konnten synthetisiert und hinsichtlich ihrer grundlegenden physikalisch-chemischen Eigenschaften beschrieben werden.

Informationen zur Lumineszenz derartiger Verbindungen fehlten bisher in der Fachliteratur gänzlich. Nunmehr haben aber SCHMIDT et al. in der nach dem Prioritätstag dieser Anmeldung veröffentlichten WO 2005/083037 A1 ceriumaktivierte Carbidonitridosilikat-Materialien, insbesondere Leuchtstoffe der Zusammensetzung Y₂Si₄N₆C:Ce mit einer Aktivatorkonzentration von 5% Ce vorgestellt. Diese Materialien lumineszieren bei Anregung mit UV-Strahlung oder mit dem Licht blau emittierender LED breitbandig im gelben Spektralbereich und weisen gemäß den veröffentlichten Angaben bezüglich ihrer Quantenausbeuten, der Absorptionseffizienzen und der Temperaturcharakteristik Leistungsdaten auf, die sich praktisch nicht von den entsprechenden Parametern anderer bekannter gelb emittierender Konversionsleuchtstoffe, wie beispielsweise der ebenfalls ceriumdotierten Yttriumaluminiumgranate oder der Eu²⁺-aktivierten Erdalkaliorthosilikate, unterscheiden.

Dagegen ist es die Aufgabe der vorliegenden Erfindung, neuartige Carbidonitridosilikat-Leuchtstoffe insbesondere für den Einsatz in leistungsfähigen weißen LED vorzuschlagen, die sich durch originäre oder verbesserte Lumineszenzeigenschaften auszeichnen.

Diese Aufgabe wird durch die in den beigefügten Patentansprüchen 1 und 2 definierten Leuchtstoffe gelöst.

Die erfindungsgemäßen Materialien gehören zur Klasse der Carbidonitride, insbesondere der Carbidonitridosilikate. Sie können allein oder aber in Mischung mit anderen geeigneten Luminophoren als Konversionsleuchtstoffe für die Herstellung von Lichtquellen, insbesondere für die Herstellung von weiß emittierenden LED eingesetzt werden.

Die Einfügung von Kohlenstoffionen in die entsprechende Nitridosilikatmatrix ist mit einer weiteren Steigerung der Kovalenz des Gitters verbunden. Basierend auf dieser Tatsache sind als besondere.Vorteile der erfindungsgemäßen Leuchtstoffe beispielsweise die geringere Tendenz zur thermischen Löschung der Lumineszenz, die hohe chemische und thermische Beständigkeit und die geringe Tendenz zur Alterung zu nennen.

Eine allgemeine Formel für die erfindungsgemäßen Leuchtstoffgrundgitter lautet:

Ln_{(2-a-b+f)} M^{I}_{(a+b-f)} Si_{(4-c-d-e-f)} M^{II}_{(c+d+e+f)}N_{(6-a+b-d+e)} O_{(a+d)}C_{(1-b-e)}

mit 0 ≤ a ≤ 2, 0 ≤ b < 1, 0 ≤ c < 4, 0 ≤ d < 4,
0 ≤ e < 1, 0 ≤ f ≤ (a+b) und 0 ≤ (b+e) < 1,
wobei Ln für mindestens eines der Metalle Indium (In), Scandium (Sc), Yttrium (Y) und für die Seltenen Erden, insbesondere für die Elemente Lanthan (La), Gadolinium (Gd) und Luthetium (Lu) bzw. für Mischungen dieser Metalle steht.

Wie in der allgemeinen Formel aufgeführt, kann Ln in einer besonderen Ausführungsform aber auch ganz oder teilweise durch ein zweiwertiges Metall M^{I}, vorzugsweise durch Zink (Zn) oder durch Erdalkalimetalle wie Magnesium (Mg), Calcium (Ca), Strontium (Sr) und Barium (Ba) ersetzt werden, wenn gleichzeitig äquimolare Mengen an Stickstoff (N) durch Sauerstoff (O) oder von Kohlenstoff (C) durch Stickstoff (N) substituiert werden.

In einer nochmals abgewandelten Ausführungsform kann Silizium (Si) auch durch eine Komponente M^{II}, beispielsweise durch Germanium (Ge) und/oder durch Bor (B) und/oder Aluminium (Al) ersetzt werden. In den zuletzt genannten Fällen müssen dann ebenfalls äquimolare Mengen an N durch O oder an C durch N oder an M^{I} durch Ln ausgetauscht werden.

In Abhängigkeit von der exakten Komposition des Leuchtstoffgrundgitters können unterschiedliche Kristallstrukturen mit unterschiedlichen Gitterplätzen für den Einbau von Seltenerd- und/oder Übergangsmetall-Aktivatorionen realisiert werden. Bevorzugte Aktivatoren sind Cerium, und/oder Terbium sowie Europium oder aber bestimmte Übergangsmetall-Elemente, die als zweiwertige (insbesondere Eu²⁺) oder dreiwertige (insbesondere Ce³⁺, Tb³⁺, Eu³⁺) Ionen in die Matrix eingebaut werden können.

Die Konzentration der Aktivatoren kann 0,001 bis 1,5 mol Aktivator pro Mol Leuchtstoff betragen. Das gegebenenfalls als Koaktivator zugefügte Cerium kann in Konzentrationen von 0,0005 bis 1,5 mol Cerium je Mol Leuchtstoff vorliegen.

Bevorzugte Ausführungsformen der erfindungsgemäßen Leuchtstoffe werden durch die folgenden Formeln bestimmt:

Ln₍₂₋ₓ₎Si₄N₆C:Tbₓ,

Ln_{(2-x-y)}Si₄N₆C: Tb_{x.} Ce_{y},

oder Ln₍₂₋ₓ₎Si₄N₆C:Euₓ

jeweils mit Ln = Y, La, Gd und/oder Lu und wobei 0,001 < x <1,0 sowie 0,001 ≤ y ≤ 1,0 ist.

Die erfindungsgemäßen Leuchtstoffe emittieren bei Anregung im UV (200 bis 380 nm) bzw. im violetten (380 bis 420 nm) oder blauen Spektralbereich (420 bis 480 nm) eine grüne, gelbe, orange oder rotfarbene Lumineszenzstrahlung. Sie besitzen eine hohe Absorption für die Anregungsstrahlung und zeichnen sich darüber hinaus durch eine hohe Quantenausbeute sowie durch eine geringe thermische Lumineszenzlöschung aus.

Aufgrund dieser Merkmale und weiterer vorteilhafter Eigenschaften können die erfindungsgemäßen Leuchtstoffe in vorteilhafter Weise sowohl als Einzelkomponenten oder aber als Mischung mehrerer erfindungsgemäßer Leuchtstoffe oder aber in Kombination (Mischung) mit anderen bekannten blau, grün, gelb oder rot emittierenden Konversionsleuchtstoffen für die Herstellung weißer LED eingesetzt werden.

Mit der vorliegenden Erfindung werden erstmals im blauen Spektralbereich anregbare leistungsfähige seltenerdaktivierte Leuchtstoffe mit 4f-4f-Linienspektren für die Herstellung weißer LED bereitgestellt. Hat sich doch überraschender Weise gezeigt, dass die gleichzeitige Dotierung bestimmter erfinderischer Carbidonitridosilikat-Leuchtstoffgrundgitter mit Terbium und Ceriumionen zu einer mit dem Licht blauer LED anregbaren grünen Tb³⁺-Linienemission führt. Seltenerdaktivierte Luminophore mit linienhaften 4f-4f-Emissionen besitzen die bereits beschriebenen Vorteile in Bezug auf die Beständigkeit gegenüber der Wirkung äußerer Kristallfelder und extrinsischer Löschfaktoren. Darüber hinaus können beim Einsatz der erfindungsgemäßen Ce³⁺-Tb³⁺-kodotierten Carbonitridosilikat-Leuchtstoffe als Grünkomponente in weißen LED jedoch noch weitere Vorteile genutzt werden. Zum einen weist der bei etwa 545 nm liegende Hauptpeak der Tb³⁺-Emission eine im Vergleich zu entsprechenden breitbandigen Spektren äußerst geringe Halbwertsbreite auf, zum anderen besteht das Emissionsspektrum aus weiteren Liniengruppen, die über den gesamten sichtbaren Spektralbereich verteilt sind. Die zuerst genannte Eigenschaft ist bei der Anwendung entsprechender weißer LED zur Hintergrundbeleuchtung von LCD (Anpassung der Emissionscharakteristik an die verwendeten Farbfilter) vorteilhaft, während die charakteristische und in bestimmten Grenzen (durch Variation des Ce/Tb-Verhältnisses) variable spektrale Verteilung der Lumineszenz der Ce³⁺-Tb³⁺-koaktivierten Leuchtstoffe im Falle des Einsatzes in weißen LED für die Allgemeinbeleuchtung zur Erreichung von verbesserten Farbwiedergabewerten (CRI-Werte) beiträgt.

Ein weiterer wichtiger Vorteil der erfinderischen Lösung ist darin zu sehen, dass hiermit ein neuartiger rot emittierender Konversionsleuchtstoff synthetisiert werden kann. In anorganischen Nitridverbindungen lassen sich deutlich stärkere Kristallfelder als im Falle der sauerstoffdominierten Leuchtstoffe realisieren. Dies ist eine wesentliche Voraussetzung für die gewünschte Rotverschiebung beispielsweise der von Eu²⁺-Ionen ausgehenden Lumineszenz.

Die im Zusammenhang mit der vorliegenden Erfindung durchgeführten Experimente haben nun überraschender Weise gezeigt, dass auch bei der Dotierung der erfindungsgemäßen Grundgitter mit Europiumionen rot emittierende Leuchtstoffe mit für den Einsatz in weißen LED geeigneten Anregungsspektren entstehen.

Weitere Einzelheiten, Vorteile und Ausbildungen der vorliegenden Erfindung ergeben sich aus der Beschreibung der Herstellungsbedingungen der Luminophore sowie aus den beigefügten Abbildungen. Es zeigen:
- Fig. 1: die Anregungs- (linker Teil der Abbildung) und Emissionsspektren (rechter Teil) ceriumdotierter Y₂Si₄N₆C-Leuchtstoffe,
- Fig. 2: das diffuse Reflexionsspektrum, das Anregungs- und das linienhafte Emissionsspektrum eines Tb³⁺- aktivierten Y₂Si₄N₆C- Phosphors,
- Fig. 3: das Anregungs- (linker Teil der Abbildung) und das Emissionsspektrum (rechter Teil) eines CeundTb-kodotierten Y₂Si₄N₆C- Materials, und

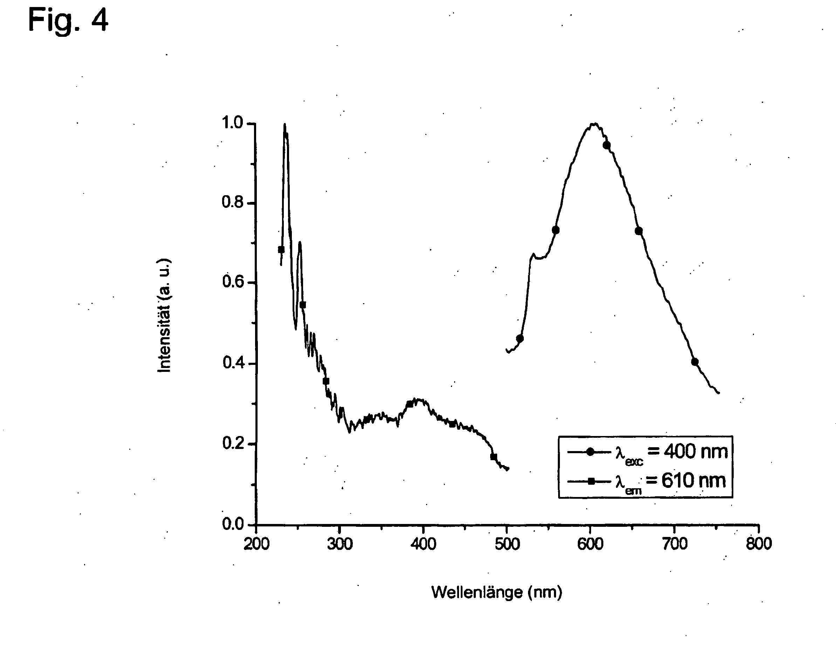

- Fig. 4: das Anregungs- und Emissionsspektrums eines Europiumaktivierten Y₂Si₄N₆C- Leuchtstoffes.

Die Herstellung der in der oben genannten allgemeinen Formel bezeichneten Seltenerd- und/oder Erdalkalimetallhaltigen Carbidonitridosilikate erfolgt vorzugsweise durch eine Hochtemperaturfestkörperreaktion. Der Hergang der Synthese soll im folgenden anhand einer allgemeinen Präparationsvorschrift sowie von zwei Ausführungsbeispielen für Ce und Tb- bzw. Eudotierte Carbidonitridosilikat-Leuchtstoffe beispielhaft beschrieben werden.

Als Ausgangsstoffe werden α-Si₃N₄, β-Si₃N₄, Kohlenstoffpulver, SiC sowie die Seltenen Erden Yttrium, Cerium, Terbium und Europium jeweils in metallischer Form verwendet. Vor Aufnahme weiterer Prozessschritte werden die Seltenerdmetalle zunächst in Stickstoff- oder Ammoniakatmosphäre nitriert. Anschließend werden die nitrierten Verbindungen zusammen mit Si₃N₄, SiC oder Kohlenstoffpulver in den jeweiligen stöchiometrischen Mengen eingewogen und intensiv vermischt. Wegen der Feuchtigkeitsempfindlichkeit einiger Ausgangsmaterialien werden all diese Manipulationen in einer "glove box" unter trockenem Stickstoff durchgeführt. Die Pulvermischungen werden in geeigneten Tiegeln positioniert und für 2 bis 48 Stunden bei Temperaturen von 1500 bis 1800°C in Hochtemperaturöfen unter reinem Stickstoff geglüht. Nach Beendigung des Glühprozesses werden die Proben auf Raumtemperatur abgekühlt und ggf. einer geeigneten Nachbehandlung unterzogen.

### Beispiel 1

Für die Präparation des Terbium- und Cer-aktivierten Carbidonitridosilikates Y_{1.00}Si₄N₆C:Tb_{0.99}Ce_{0.01} wird Terbiummetall zunächst bei 1200 °C für 12 Stunden in einem horizontalen Röhrenofen unter reiner Stickstoffatmosphäre zu TbNₓ (x ≈ 0,99) nitriert.

Die Ausgangsstoffe 34,24 g TbNₓ; 17,78 g Yttriummetall; 0,28 g Cermetall; 28,06 g α-Si₃N₄ und 8,02 g SiC werden anschließend in trockener Stickstoffatmosphäre in einem Achatmörser intensiv vermischt und in einen Molybdäntiegel eingebracht. Diese Pulvermischung wird für 10 Stunden bei 1600 °C unter reinem Stickstoff geglüht und anschließend im Ofen auf Raumtemperatur abgekühlt. Nach der Entfernung von nicht reagierten und löslichen Bestandteilen liegt ein grün emittierender Leuchtstoff der Zusammensetzung Y_{1.00}Si₄N₆C:Tb_{0.99}Ce_{0.01} vor.

### Beispiel 2

Zur Herstellung eines mit 5% Europium aktivierten Carbidonitridosilikates der Komposition Gd_{1,8}Sr_{0,2}Si₄N_{6,2}C_{0,8} werden reines Strontium- und Europiummetall bei 850 °C für zwei Stunden in einem horizontalen Röhrenofen unter reiner Stickstoffatmosphäre zu den Präcursoren Sr₃N₂ und EuN nitriert. Danach werden 56,61 g Gadoliniummetall; 2,91 g Sr₃N₂; 1,66 g EuN; 29,93 g α-Si₃N₄ und 6,42 g SiC in trockener Stickstoffatmosphäre intensiv vermischt und in einen thermisch beständigen Tiegel gegeben. Die Glühung der Mischung erfolgt für 24 Stunden bei 1750 °C in einer Stickstoff-Wasserstoff-Atmosphäre (90:10). Nach geeigneter Probenaufarbeitung wird ein effizient rot lumineszierender Leuchtstoff erhalten.

Die beigefügten Figuren sind für den Leuchtstofffachmann weitgehend selbsterklärend. Die prinzipiellen Angaben zu den dargestellten Sachverhalten wurden bereits oben gemacht. Ergänzend wird nachfolgend nur noch auf einige Besonderheiten hingewiesen.

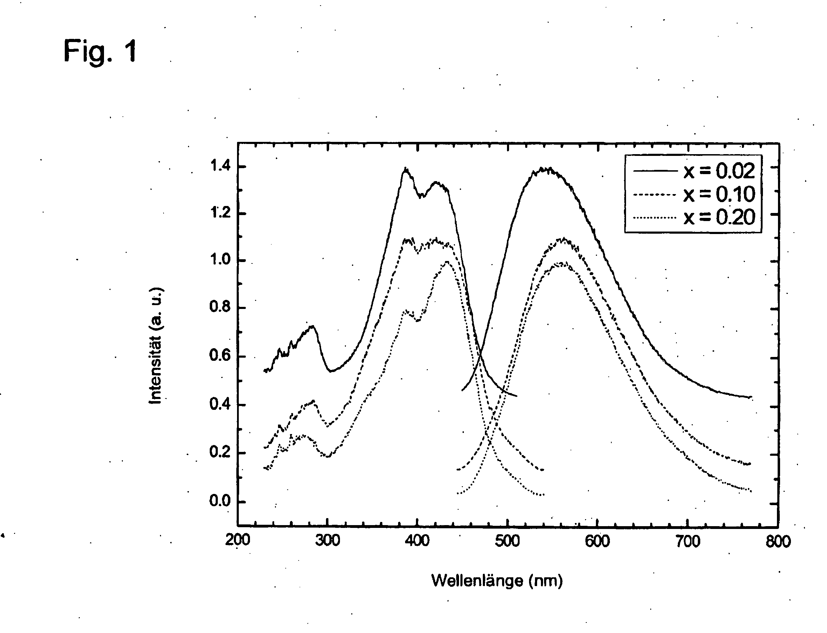

Aus Fig. 1 ist ersichtlich, dass allein mit Ceriumionen dotierte Y₂Si₄N₆C - Leuchtstoffe bei Anregung zwischen 360 und 450 nm im gelb-grünen Spektralbereich lumineszieren. Die verschiedenen Kurven beziehen sich jeweils auf unterschiedliche Dotierungskonzentrationen, deren Werte im Diagramm mit genannt sind.

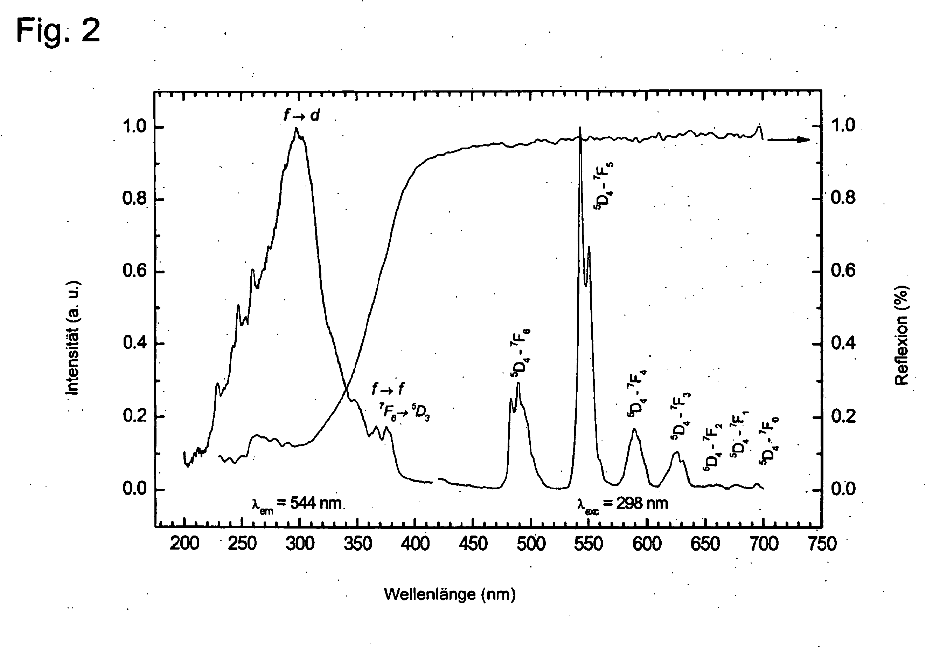

Fig. 2 veranschaulicht, dass allein mit Tb³⁺ aktivierte Y₂Si₄N₆C - Leuchtstoffe im Bereich zwischen 280 bis 320 nm angeregt werden müssen, um eine effiziente grüne Tb³⁺- Linienemission zu erreichen.

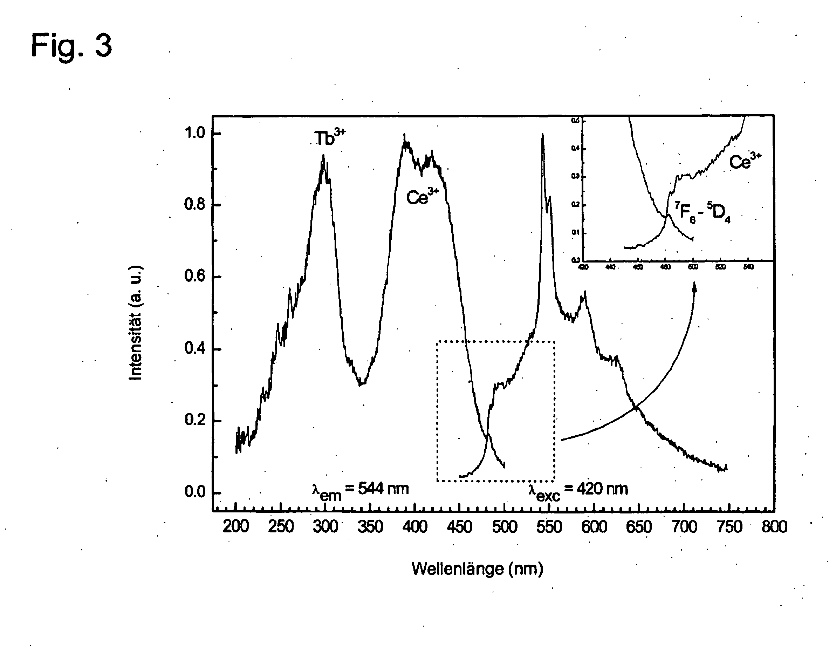

Aus Fig. 3 lässt sich gut erkennen, dass Ce-und Tb-kodotierte Y₂Si₄N₆C - Wirtsgitter auch im Bereich zwischen 360 und 450 nm wirkungsvoll angeregt werden können. Im gewählten Beispiel resultiert daraus eine Tb³⁺-Linienemission, die von der Ce³⁺-Breitbandemission überlagert wird. Es lassen sich aber auch Ce/Tb-Konzentrationsverhältnisse finden, bei denen die linienhafte Terbiumemission deutlich überwiegt und die Cerium-Lumineszenz stark zurückgedrängt ist.

Aus der Fig.. 4 kann schließlich abgeleitet werden, dass auch die bei einer Maximumswellenlänge von 610 nm registrierte Emissionbande der Europiumaktivierten Y₂Si₄N₆C - Matrix im interessanten Bereich von 350 bis 480 nm angeregt werden kann.

Obwohl nur einige Ausführungsformen näher beschrieben wurden, ist dem Fachmann klar, dass zahlreiche Abwandlungen des erfindungsgemäßen Leuchtstoffs möglich sind. Die Variationsmöglichkeiten wurden durch Angabe allgemeingültige Formeln und die Benennung von denkbaren Austauschelementen aufgezeigt.

## Patentansprüche

1. Leuchtstoff aus einem dotierten Wirtsgitter, der bei Anregung mit einer energiereichen Anregungsstrahlung zumindest einen Teil dieser Anregungsstrahlung absorbiert und daraufhin eine energieärmere Emissionsstrahlung abgibt, **dadurch gekennzeichnet, dass** das Wirtsgitter eine Verbindung mit der folgenden allgemeinen Formel ist
Ln_{(2-a-b+f)} M^{I}_{(a+b-f)} Si_{(4-c-d-e-f)} M^{II}_{(c+d+e+f)}N_{(6-a+b-d+e)} O_{(a+d)}C_{(1-b-e)}
mit 0 ≤ a ≤ 2, 0 ≤ b < 1, 0 ≤ c < 4, 0 ≤ d <4, 0 ≤ e <1, 0 ≤f ≤ (a+b),
und 0 ≤ (b+e) < 1, wobei
- Ln ein Element oder eine Mischung aus Elementen der folgenden Gruppe ist:
■ Indium (In),
■ Scandium (Sc),
■ Yttrium (Y),
■ Seltene Erden;
- M^{I} ein zweiwertiges Metall oder eine Mischung aus zweiwertigen Metallen ist; und
- M^{II} ein Element oder eine Mischung.aus Elementen der folgenden Gruppe ist:
■ Germanium (Ge),
■ Bor (B),
■ Aluminium (Al).

2. Leuchtstoff nach Anspruch 1, **dadurch gekennzeichnet, dass** bei Vorhandensein von M^{I} und/oder M^{II} äquimolare Mengen an Stickstoff (N) durch Sauerstoff (O) und/oder an Kohlenstoff (C) durch Stickstoff (N) substituiert sind.

3. Leuchtstoff nach Anspruch 1 oder 2, **dadurch gekennzeichnet, dass** die in das Wirtsgitter dotierten Aktivatoren zweiwertige oder dreiwertige Seltenerdionen oder Obergangsmetallionen sind.

4. Leuchtstoff nach Anspruch 3, **dadurch gekennzeichnet, dass** die Aktivatoren Eu²⁺, Ce³⁺, Tb³⁺ und/oder Eu³⁺ Ionen sind.

5. Leuchtstoff nach Anspruch 4, **dadurch gekennzeichnet, dass** Tb³⁺ Ionen als Aktivatoren und Ce³⁺ Ionen als Koaktivatoren in das Wirtsgitter dotiert sind.

6. Leuchtstoff nach einem der Ansprüche 3 bis 5, **dadurch gekennzeichnet, dass** die Konzentration der Aktivatoren 0,001 bis 1,5 Mol Aktivator pro Mol Leuchtstoff beträgt.

7. Leuchtstoff nach einem der Ansprüche 3 bis 6, **dadurch gekennzeichnet, dass** Cer als Koaktivator in einer Konzentration von 0,0005 bis 1,5 Mol Cer je Mol Leuchtstoff in das Wirtsgitter dotiert ist.

8. Leuchtstoff nach einem der Ansprüche 1 bis 7, **dadurch gekennzeichnet, dass** zumindest einer der Parameter c, d, e oder f größer als Null gewählt ist.

9. Leuchtstoff nach einem der Ansprüche 1 bis 8, **dadurch gekennzeichnet, dass** die Komponente Ln ein Element aus der Gruppe Lanthan (La), Gadolinium (Gd) und Luthetium (Lu) enthält.

10. Leuchtstoff nach einem der Ansprüche 1 bis 9, **dadurch gekennzeichnet, dass** die Komponente M^{I} Zink (Zn) enthält.

11. Leuchtstoff nach einem der Ansprüche 1 bis 10, **dadurch gekennzeichnet, dass** die Komponente M^{I} ein oder mehrere Erdalkalimetalle, insbesondere Mg, Ca, Sr, Ba enthält.

12. Leuchtstoff nach einem der Ansprüche 1 bis 11, **dadurch gekennzeichnet, dass** zumindest einer der Parameter a oder dgrößer als Null gewählt ist.

13. Leuchtstoff nach einem der Ansprüche 1 bis 3, **dadurch gekennzeichnet, dass** er durch die eine der folgenden Formeln bestimmt ist:
- Ln₍₂₋ₓ₎Si₄N₆C:Tbₓ,
- Ln_{(2-x-y)}Si₄N₆C:Thₓ, Ce_{y}
- Ln₍₂₋ₓ₎S₄N₆C:Euₓ
wobei jeweils Ln = Y, La, Gd und/oder Lu und wobei 0,001 < x <1,5 sowie 0,0005 ≤ y ≤ 1,5.

14. Leuchtstoff nach einem der Ansprüche 1 bis 13, **dadurch gekennzeichnet, dass** er durch Strahlung mit Wellenlängen von 200 bis 480 nm zu einer Emission anregbar ist.

15. Leuchtstoff nach Anspruch 14, **dadurch gekennzeichnet, dass** bei entsprechender Anregung eine grüne, gelbe, orange oder rotfarbene Emissionsstrahlung emittiert.

16. Leuchtstoff nach einem der Ansprüche 1 bis 15, **dadurch gekennzeichnet, dass** er bei Anregung mit blauer Anregungsstrahlung eine Strahlung emittiert, die ein Linienspektrum aufweist, welches aus 4f-4f Elektronenübergängen resultiert.

17. Leuchtmittel zur Erzeugung von weißem Licht, **dadurch gekennzeichnet, dass** es ein Licht emittierendes Element und zumindest einen Leuchtstoff nach einem der Ansprüche 1 bis 16 umfasst, welcher durch die vom emittierenden Element erzeugte Anregungsstrahlung angeregt wird und in einem anderen Spektralbereich Emissionsstrahlung emittiert.

18. Leuchtmittel nach Anspruch 17, **dadurch gekennzeichnet, dass** das Licht emittierende Element eine LED ist.

19. Leuchtmittel nach Anspruch 17 oder 18, **dadurch gekennzeichnet, dass** die LED im Wellenlängenbereich von 200 bis 480 nm emittiert und dass der Leuchtstoff blaue, grüne, gelbe oder rote Strahlung emittiert.

## Claims

1. A luminescent substance consisting of a doped host lattice which, when it is excited by a high-energy excitation radiation, absorbs at least a portion of said excitation radiation and then emits a lower-energy emission radiation, **characterized in that** the host lattice is a compound with the following formula
Ln_{(2-a-b+f)} M^{I}_{(a+b-f)} Si_{(4-c-d-e-f)} M^{II}_{(c+d+e+f)} N_{(6-a+b-d+e)} O_{(a+d)} C_{(1-b-e)}
where 0≤a≤2, 0≤b<1, 0≤c<4, 0≤d<4, 0≤e<1, 0≤f≤(a+b),
and 0≤(b+e)<1, wherein
- Ln is an element or a mixture of elements from the following group:
■ Indium (In),
■ Scandium (Sc),
■ Yttrium (Y),
■ rare earths;
- M^{I} is a divalent metal or a mixture of divalent metals; and
- M^{II} is an element or a mixture of elements from the following group:
■ Germanium (Ge),
■ Boron (B),
■ Aluminium (Al).

2. The luminescent substance according to claim 1,
**characterized in that** in the presence of M^{I} and/or M^{II}, equimolar amounts of Nitrogen (N) are substituted by Oxygen (0) and/or equimolar amounts of Carbon (C) are substituted by Nitrogen (N).

3. The luminescent substance according to claim 1 or 2,
**characterized in that** the doped activators in the host lattice are divalent or trivalent rare earth ions or transition metal ions.

4. The luminescent substance according to claim 4,
**characterized in that** the activators are Eu²⁺, Ce³⁺, Tb³⁺ and/or Eu³⁺ ions.

5. The luminescent substance according to claim 4,
**characterized in that** Tb³⁺ ions as activators and Ce³⁺ ions as coactivators are doped into the host lattice.

6. The luminescent substance according to one of the claims 3 to 5, **characterized in that** the concentration of activators is 0.001 to 1.5 mol activator per mol luminescent substance.

7. The luminescent substance according to one of the claims 3 to 6, **characterized in that** Cerium as the co-activator is doped into the host lattice in a concentration of 0.0005 to 1.5 mol Cerium per mol luminescent substance.

8. The luminescent substance according to one of the claims 1 to 7, **characterized in that** at least one of the parameters c, d, e or f is selected to be greater than zero.

9. The luminescent substance according to one of the claims 1 to 8, **characterized in that** the component Ln contains an element from the group Lanthanum (La), Gadolinium (Gd) and Lutetium (Lu).

10. The luminescent substance according to one of the claims 1 to 9, **characterized in that** the component M^{I} contains Zinc (Zn).

11. The luminescent substance according to one of the claims 1 to 10, **characterized in that** the component M^{I} contains one or a plurality of alkaline earth metals, in particular Mg, Ca, Sr, Ba.

12. The luminescent substance according to one of the claims 1 to 11, **characterized in that** at least one of the parameters a or d is selected to be greater than zero.

13. The luminescent substance according to one of the claims 1 to 3, **characterized in that** it is defined by one of the following formulae:
- Ln₍₂₋ₓ₎Si₄N₆C:Tbₓ,
- Ln_{(2-x-y)}Si₄N₆C:Tbₓ, Ce_{y}
- Ln₍₂₋ₓ₎Si₄N₆C:Euₓ,
wherein Ln=Y, La, Gd and/or Lu and wherein 0.001 < x < 1.5 and 0.0005 ≤ y ≤ 1.5.

14. The luminescent substance according to one of the claims 1 to 13, **characterized in that** it can be excited to emission by radiation with wavelengths of 200 to 480 nm.

15. The luminescent substance according to claim 14, **characterized in that** with appropriate excitation a green, yellow, orange or red-coloured emission radiation is emitted.

16. The luminescent substance according to one of the claims 1 to 15, **characterized in that** on excitation with blue excitation radiation, the luminescent substance emits a radiation having a line spectrum which results from 4f-4f electron transitions.

17. A luminescent means for generating white light, **characterized in that** it comprises a light-emitting element and at least one luminescent substance according to one of the claims 1 to 16, which is excited by excitation radiation generated by the emitting element and emits emission radiation in another spectral range.

18. The luminescent means according to claim 17, **characterized in that** the light-emitting element is an LED.

19. The luminescent means according to claim 17 or 18, **characterized in that** the LED emits light in the wavelength range of 200 to 480 nm and that the luminescent substance emits blue, green, yellow or red radiation.

## Revendications

1. Luminophore constitué d'un réseau hôte dopé, absorbant au moins une partie du rayonnement d'excitation suite à une excitation au moyen d'un rayonnement d'excitation de haute énergie pour ensuite émettre un rayonnement d'émission de plus basse énergie, **caractérisé en ce que** ledit réseau hôte est un composé ayant la formule générale suivante
Ln_{(2-a-b+f)} M^{I}_{(a+b-f)} Si_{(4-c-d-e-f)} M^{II}_{(c+d+e+f)} N_{(6-a+b-d+e)} O_{(a+d)} C_{(1-b-e)}
avec 0≤a≤2, 0≤b<1, 0≤c<4, 0≤d<4, 0≤e<1, 0≤f≤(a+b),
et 0≤(b+e)<1,
- Ln étant un élément ou un mélange d'éléments issu du groupe suivant :
■ indium (In)
■ scandium (Sc)
■ yttrium (Y)
■ terres rares ;
- M^{I} étant un métal divalent ou un mélange de métaux divalents; et
- M^{II} étant un élément ou un mélange d'éléments issu du groupe suivant:
■ germanium (Ge)
■ bore (B)
■ aluminium (A1).

2. Luminophore selon la revendication 1, **caractérisé en ce que**, lorsque M^{I} et/ou M^{II} sont présents, des quantités équimolaires d'azote (N) sont substituées par l'oxygène (0) et/ou de carbone (C) par l'azote (N).

3. Luminophore selon les revendications 1 ou 2, **caractérisé en ce que** les activateurs introduits dans le réseau hôte par dopage sont des ions divalents ou trivalents de terres rares ou de métaux de transition.

4. Luminophore selon la revendication 3, **caractérisé en ce que** les activateurs sont des ions Eu²⁺, Ce³⁺, Tb³⁺ et/ou Eu³⁺.

5. Luminophore selon la revendication 4, **caractérisé en ce que** des ions Tb³⁺ sont introduits dans le réseau hôte en tant qu'activateurs et des ions Ce³⁺ en tant que co-activateurs.

6. Luminophore selon l'une des revendications 3 à 5, **caractérisé en ce que** la concentration des activateurs est comprise entre 0,001 et 1,5 moles d'activateur par mole de luminophore.

7. Luminophore selon l'une des revendications 3 à 6, **caractérisé en ce que** le cérium est introduit dans le réseau hôte en tant que co-activateurs dans une concentration comprise entre 0,0005 et 1,5 moles de cérium par mole de luminophore.

8. Luminophore selon l'une des revendications 1 à 7, caractérisé en ce qu'au moins un des paramètres c, d, e ou f est choisi supérieur à zéro.

9. Luminophore selon l'une des revendications 1 à 8, **caractérisé en ce que** le composant Ln contient un élément issu du groupe de lanthane (La), gadolinium (Gd) et lutécium (Lu).

10. Luminophore selon l'une des revendications 1 à 9, **caractérisé en ce que** le composant M^{I} contient du zinc (Zn).

11. Luminophore selon l'une des revendications 1 à 10, **caractérisé en ce que** le composant M^{I} contient un ou plusieurs métaux alcalino-terreux, s'agissant notamment de Mg, Ca, Sr, Ba.

12. Luminophore selon l'une des revendications 1 à 11, caractérisé en ce qu'au moins un des paramètres a ou d est choisi supérieur à zéro.

13. Luminophore selon l'une des revendications 1 à 3, caractérisé en ce qu'il est défini par l'une les formules suivantes :
- Ln₍₂₋ₓ₎Si₄N₆C:Tbₓ,
- Ln_{(2-x-y)}Si₄N₆C:Tbₓ, Ce_{y}
- Ln₍₂₋ₓ₎Si₄N₆C:EUₓ
dans chacune desquelles Ln = Y, La, Gd et/ou Lu et dans lesquelles 0,001 < x < 1,5 ainsi que 0,0005 ≤ y ≤ 1,5.

14. Luminophore selon l'une des revendications 1 à 13, caractérisé en ce qu'il puisse être excité par un rayonnement ayant des longueurs d'onde comprises entre 200 et 480 nm.

15. Luminophore selon la revendication 14, caractérisé en ce qu'il émet, suite à une excitation correspondante, un rayonnement de couleur verte, jaune, orange ou rouge.

16. Luminophore selon l'une des revendications 1 à 15, caractérisé en ce qu'il émet, suite à une excitation au moyen d'un rayonnement d'excitation, un rayonnement présentant un spectre de lignes qui résulte de transitions d'électrons de type 4f-4f.

17. Moyen d'éclairage destiné à produire une lumière blanche, caractérisé en ce qu'il comprend un élément émetteur de lumière et au moins un luminophore selon l'une des revendications 1 à 16, ce dernier étant excité par un rayonnement d'excitation produit par ledit élément émetteur et émettant un rayonnement d'émission dans un autre domaine spectral.

18. Moyen d'éclairage selon la revendication 17, **caractérisé en ce que** ledit élément émetteur est une LED.

19. Moyen d'éclairage selon la revendication 17 ou 18, **caractérisé en ce que** la LED émet dans une gamme des longueurs d'ondes comprise entre 200 et 480 nm et que le luminophore émet un rayonnement bleu, vert, jaune ou rouge.
